# EUROPEAN PATENT APPLICATION

(11) **EP 1 775 871 A2**
(43) Date of publication of application: **18.04.2007**
(21) Application number: 06121122.3
(22) Date of filing: 22.09.2006
(51) Int. Cl.: H04L 1/00

(54) **Data packet and data packet constructing method using reserved bits**

(30) Priority: 12.10.2005 KR 20050096119
(71) Applicant: Samsung Electronics Co., Ltd., Suwon-si, Gyeonggi-Do (KR)
(72) Inventor: Kim, Hae-sik, Yeongtong-gu, Suwon-si Gyeonggi-do (KR); Kong, Jun-jin, suji-gu, Yongin-si Gyeonggi-do (KR); Roh, Jae-ho, Gangnam-gu, Seoul (KR)
(74) Representative: Zimmer, Franz-Josef

(57) **Abstract**

A method of constructing a data packet, including constructing a PLCP (physical layer convergence protocol) header including first, second, and third tail bits and constructing last 2 bits of reserved bits of a PHY (physical layer) header as the first tail bits.

## Description

### BACKGROUND OF THE INVENTION

### Field of the Invention

The present invention relates to data packet constructing techniques using reserved bits. Particularly, according to the techniques some of the reserved bits of a data packet to be transmitted are set to tail bits to secure a number of tail bits sufficient for constructing the data packet. This improves reliability of the data packet during constructing of the data packet in ultra-wide band (UWB) communications.

### Description of the Related Art

Recently emerging UWB wireless technology enables high speed data transmission using several hundreds of MHz. Orthogonal frequency-division multiplexing (OFDM) is one of the techniques for realizing such UWB communications. The OFDM uses sub-carriers of several tens or several hundreds of types of frequencies so as to compress a larger amount of information in each symbol period compared to a digital data transmission system, and then transmit the information. Thus, the OFDM uses a smaller number of symbols compared to other digital data transmission systems to transmit the same number of bits per second.

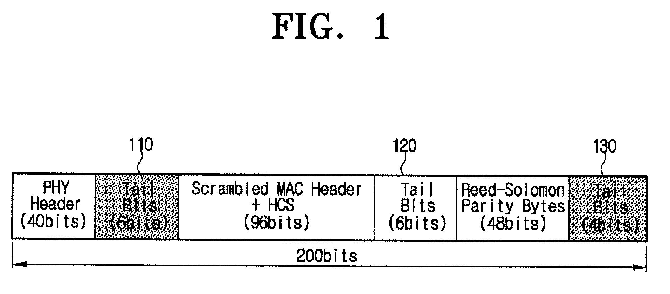

FIG. 1 is a view illustrating a packet structure of a physical layer convergence procedure (PLCP) header transmitted and/or received in an UWB communication according to a multi-band (MB)-OFDM method. As shown in FIG. 1, the PLCP header includes a physical layer (PHY) header (40 bits), first tail bits 110 (6 bits), a scrambled media access control (MAC) header and a header check sequence (HCS) (96 bits), second tail bits 120 (6 bits), Reed-Solomon parity bytes (48 bits), and third tail bits 130 (4 bits).

In other words, the PHY header includes 200 bits, the first and second tail bits each include 6 bits, and the third tail bits include 4 bits so as to make 200 bits. Here, tail bits are used to initialize Trellis in a well-known state so as to assist a decoding process.

However, in a case where a data packet is encoded using a convolution code, as many tail bits as a constraint length **K** are required at an end part of the data packet. However, the tail bits cannot be sufficiently secured due to a size of the data packet limited to 200 bits.

Also, "State" of the convolution code cannot converge into "Known State" using existing 16 tail bits. Thus, when "Traceback Start Point" is set in the PLCP header, one of a plurality of "States" must be selected to perform "Traceback." As a result, "Minimum State Finder" is required.

### SUMMARY OF THE INVENTION

Accordingly, the present general inventive concept has been made to solve some of the above-mentioned problems.

An aspect of the present general inventive concept is a data packet constructing method using reserved bits by which some of the reserved bits of a data packet to be transmitted are set to tail bits to secure a number of tail bits sufficient for constructing the data packet.

According to an aspect of the present invention, there is provided a method of constructing a data packet, including: constructing a PLCP (physical layer convergence protocol) header comprising first, second, and third tail bits; and constructing last 2 bits of reserved bits of a PHY (physical layer) header as the first tail bits.

The first tail bits may be 4 bits, the second bits may be 6 bits, and the third bits may be 6 bits.

The first tail bits may be 5 bits, the second tail bits may be 5 bits, and the third tail bits may be 6 bits.

The first tail bits may be first CRC (cyclic redundancy check) bits, and the second tail bits may be second CRC bits.

The first CRC bits may be 5 bits, and the second CRC bits may be 5 bits. The first tail bits may be CRC bits. The CRC bits may be 4 bits.

Another aspect of the present invention is a data packet comprising a physical layer convergence procedure header including first tail bits, second tail bits, and third tail bits. The last 2 bits of reserved bits of a physical layer header are included in the first tail bits.

### BRIEF DESCRIPTION OF THE DRAWINGS

The above aspects and features of the present invention will be more apparent by describing certain embodiments of the present invention with reference to the accompanying drawings, in which:

FIG. 1 is a view illustrating a packet structure of a PLCP header transmitted and/or received in an UWB communication according to a MB-OFDM method;

FIG. 2 is a view of a packet structure illustrating a method of constructing a data packet using reserved bits according to an embodiment of the present invention;

FIG. 3 is a view of a packet structure illustrating a method of constructing a data packet using reserved bits according to another embodiment of the present invention;

FIG. 4 is a view of a packet structure illustrating a method of constructing a data packet using reserved bits according to another embodiment of the present invention; and

FIG. 5 is a view of a packet structure illustrating a method of constructing a data packet using reserved bits according to another embodiment of the present invention.

### DETAILED DESCRIPTION OF THE EXEMPLARY EMBODIMENTS

Certain embodiments of the present invention will be described in greater detail with reference to the accompanying drawings.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

For understanding of the present invention, a PLCP header having a packet structure according to the present invention will be described according to Wimedia PHY standards. Thus, a structure of a general UWB transceiver will be omitted.

A data packet used in a UWB communication has a structure in which a PLCP preamble, a PHY header, a MAC header, a HCS, tail bits, a frame payload, a frame check sequence (FCS), tail bits, and pad bits are sequentially arranged in transmission order.

In the PHY header, "Rate" indicating data transmission speed information, "Reserved" disposed with reserved bits, "Length" indicating frame length information, and "Scrambler Init" indicating scramble method information are sequentially arranged.

In the PLCP preamble, a packet sync. sequence, a frame sync. sequence, and a channel est. sequence are sequentially arranged.

In other words, a preamble is added to a starting position of a PLCP packet to indicate an existence of the PLCP packet, and a symbol pattern is defined in the preamble. After the preamble, a signal field is defined and includes information necessary for decoding a payload of the PLCP packet. Encoding robust to a noise is performed with respect to a signal part including a PLCP header, and thus the signal part is transmitted at a speed of 39.4Mbps.

A packet of the payload including a service field is transmitted in a transmission speed mode in which the highest bit rate is provided within a range so that no error is generated given a specific signal-to-noise-rate (SNR) of a receiver. The payload is a physical layer service data unit (PSDU) and transmitted to and/or received from a link layer as an upper layer.

In a case of a MB-OFDM, a channel coder adds bits to a bitstream to recover a signal that could be lost during a transmission of a data packet. The bitstream may be scrambled and undergo convolution coding so as to prevent the signal from having a specific pattern. The possibility of an error occurring during a channel transmission being recovered is higher with an increase in a ratio of the added bits.

The convolution coding is also performed on the tail bits inside the PLCP header. Here, if the tail bits are 6 bits, "State" of a convolution code may be changed into "Known State," i.e., "0." Thus, if three tail bits in the PLCP header are each 6 bits to make 18 bits, all of the three tail bits may be used.

In the present invention, "State" of a convolution code cannot be changed into "Known State" using existing 16 tail bits. Thus, to change the "State" of the convolution code into the "Known State" with 16 tail bits and 200 bits of a PLCP header according to the Wimedia PHY standards kept, a size of first tail bits following a PHY header is reduced, a size of third tail bits following parity bytes is increased to an original size, and reserved bits in the PHY header are allotted to the first tail bits so as to fill insufficient bits of the first tail bits.

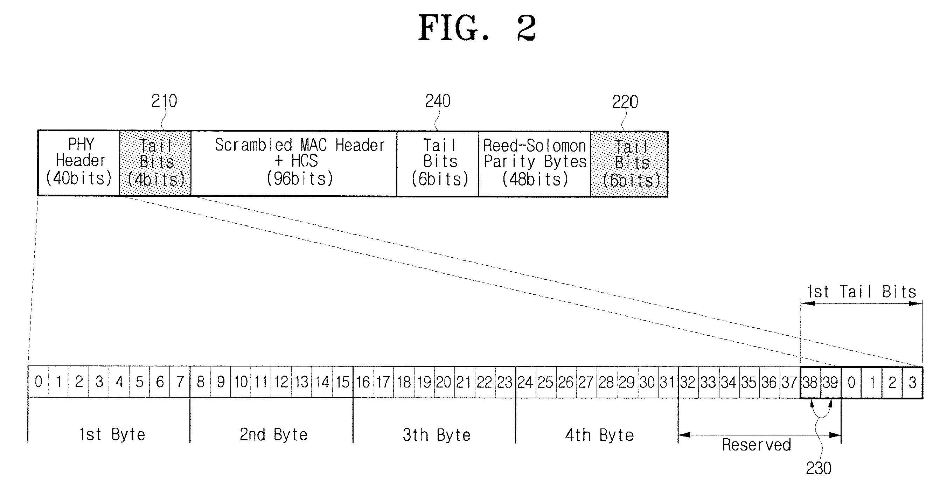

FIG. 2 is a view of a packet structure illustrating a method of constructing a data packet using reserved bits according to an embodiment of the present invention. Referring to FIG. 2, in a PLCP header packet of FIG. 2 according to the present embodiment, first tail bits 210 following a PHY header are 4 bits, third tail bits 220 are 6 bits, and 2 bits 230 of reserved bits of the PHY header are set to the first tail bits 210. Here, second tail 240 bits are 6 bits.

In other words, as shown in FIG. 2, thirty nine and forty bits belonging to a fifth byte of the PHY header including 40 bits, i.e., the 2 bits 230 are set to tail bits so that the 2 bits 230 are added to the first tail bits 210 following the PHY header, so as to construct the first tail bits 210 having 6 bits. The PLCP header packet includes three tail bits each having 6 bits.

Also, the PLCP header packet can use tail bits as boundaries. Thus, since the PLCP header packet includes the three tail bits, the PLCP header packet can be divided into three parts.

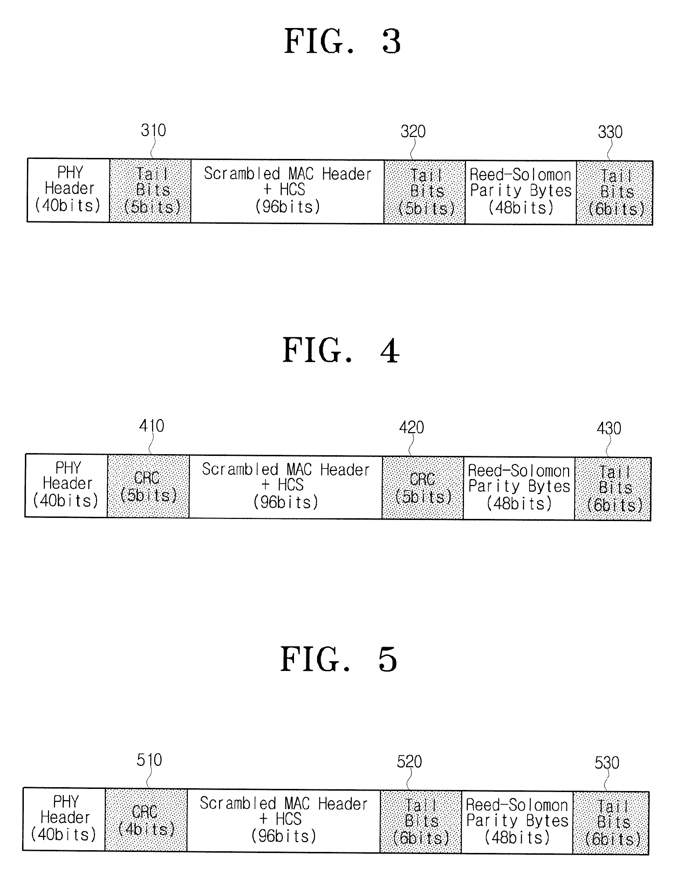

FIG. 3 is a view of a packet structure illustrating a method of constructing a data packet using reserved bits according to another embodiment of the present invention.

In a PLCP header packet of FIG. 3 according to the present embodiment, first tail bits 310 following a PHY header are 5 bits, second tail bits 320 are 5 bits, and third tail bits 330 are 6 bits so as to construct original tail bits using 16 bits. Thus, 16 bits of the original tail bits can be maintained.

In a case where tail bits each include 5 bits as described above, the tail bits cannot be used during convolution coding. However, one of two "States" may be selected for "Traceback Start Point." Thus, only one "Maximum State Finer" may be used.

FIG. 4 is a view of a packet structure illustrating a method of constructing a data packet using reserved bits according to another embodiment of the present invention.

In a PLCP header packet of FIG. 4 according to the present embodiment, first cyclic redundancy check (CRC) bits 410 having 5 bits are constructed in a position of first tail bits following a PHY header, second CRC bits 420 having 5 bits are constructed in a position of second tail bits, and third tail bits 430 having 6 bits are constructed in a last position of the PLCP header packet.

Accordingly, CRC bits for correcting an error are constructed in an intermediate position of a data packet encoded with a systematic code. Thus, an error correction is performed in a PLCP header packet in advance and then re-performed in original CRC bits of a system. As a result, the reliability of the data packet can be improved.

Transmitted data is input to a PHY header generator, a MAC header generator, and a data+FCS generator during a transmission of a PLCP packet. The PHY header generator generates a PHY header corresponding to the input data, i.e., a PHY header including scramble seed information and information as to a transmission speed of a MAC frame, a data length, and the like and then outputs the PHY header to a multiplexer. The MAC header generator generates a MAC header corresponding to the input data, i.e., a MAC header including a frame control signal, information as to a PicoNet ID, a destination ID, a source ID, and a fragmentation control, and stream index information, and then outputs the MAC header to the multiplexer. The data+FCS generator generates data+FCS corresponding to the input data and then outputs the data+FCS to the multiplexer. Here, the data+FCS generator inserts and outputs a FCS of 32bits as a CRC so that the FCS corresponds to generated data and transmitted data.

The multiplexer multiplexes signals output from the PHY header generator and the MAC header generator so that the signals correspond to a physical layer frame structure, and then outputs the multiplexed signals to a HCS generator. The HCS generator generates a HCS corresponding to the PHY header and the MAC header and then outputs the HCS to the multiplexer. The multiplexer multiplexes signals output from the MAC header generator and the data+FCS generator so that the signals correspond to the physical layer frame structure, and then outputs the multiplexed signals to a scrambler. The scrambler receives the signals from the multiplexer, scrambles the signals using pre-set scrambler seed information, and outputs the scrambled signals to the multiplexer. The multiplexer multiplexes and outputs the signal output from the PHY header generator and the signals output from the scrambler so that the signals correspond to the physical layer frame structure.

A tail generator generates tail symbols to indicate a Trellis initial state and then outputs the tail symbols to the multiplexer. The multiplexer multiplexes a signal output from each structure and a signal output from the tail generator so that the signals correspond to the physical layer frame structure, and then outputs the multiplexed signals to a modulator. Thus, the modulator modulates and outputs the signals output from the multiplexer so that the signals correspond to an OFDM modulation method.

FIG. 5 is a view of a packet structure illustrating a method of constructing a data packet using reserved bits according to another embodiment of the present invention.

In a PLCP header packet of FIG. 5 according to the present embodiment, CRC bits 510 having 4 bits are constructed in a position of first tail bits following a PHY header, first tail bits 520 having 6 bits are constructed in a position of second tail bits, and second tail bits 530 having 6 bits are constructed in a position of third tail bits.

Thus, CRC bits for correcting an error and tail bits for initializing Trellis are used in an intermediate position of a data packet encoded with a systematic code. As a result, the reliability of information can be improved, and information bits and parity bits can be separated from the data packet.

As described above, according to the present invention, when a viterbi decoder decodes a data packet, a Minimum State Finder can be reduced. Also, tail bits can be sufficiently secured in the data packet. In addition, CRC bits can be used in a PHY header so as to improve the reliability of the data packet.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A method of constructing a data packet, comprising:
constructing a physical layer convergence procedure header comprising first, second, and third tail bits; and
constructing last plurality of bits of reserved bits of a physical layer header as the first tail bits.

2. The method of claim 1, wherein the plurality of bits is 2.

3. The method of claim 2, wherein the first tail bits are 4 bits, the second bits are 6 bits, and the third bits are 6 bits.

4. The method of claim 2, wherein the first tail bits are 5 bits, the second tail bits are 5 bits, and the third tail bits are 6 bits.

5. The method of claim 2, wherein the first tail bits are first cyclic redundancy check bits, and the second tail bits are second cyclic redundancy check bits.

6. The method of claim 5, wherein the first cyclic redundancy check bits are 5 bits, and the second cyclic redundancy check bits are 5 bits.

7. The method of claim 2, wherein the first tail bits are cyclic redundancy check bits.

8. The method of claim 7, wherein the cyclic redundancy check bits are 4 bits.

9. A data packet, comprising:
a physical layer convergence procedure header including first tail bits, second tail bits, and third tail bits;
wherein last plurality of bits of reserved bits of a physical layer header are included in the first tail bits.

10. The data packet of claim 9, wherein the plurality of bits is 2.

11. The data packet of claim 10, wherein the first tail bits are 4 bits, the second tail bits are 6 bits, and the third tail bits are 6 bits.

12. The data packet of claim 10, wherein the first tail bits are 5 bits, the second tail bits are 5 bits, and the third tail bits are 6 bits.

13. The data packet of claim 10, wherein the first tail bits are first cyclic redundancy check bits, and the second tail bits are second cyclic redundancy check bits.

14. The data packet of claim 13, wherein the first cyclic redundancy check bits are 5 bits, and the second cyclic redundancy check bits are 5 bits.

15. The data packet of claim 10, wherein the first tail bits are cyclic redundancy check bits.

16. The data packet of claim 15, wherein the cyclic redundancy check bits are 4 bits.
